# EUROPÄISCHE PATENTSCHRIFT

(11) **EP 1 297 943 B1**
(45) Veröffentlichungstag und Bekanntmachung des Hinweises auf die Patenterteilung: **09.08.2006**
(21) Anmeldenummer: 01122595.0
(22) Anmeldetag: 26.09.2001
(51) Int. Cl.: B29C 51/04, B29C 51/26

(54) **Vorrichtung zum Tiefziehen von becherförmigen Körpern**
Apparatus for thermoforming of cup-like containers
Dispositif pour le thermoformage des récipients en forme de gobelet

(43) Veröffentlichungstag der Anmeldung: 02.04.2003
(73) Patentinhaber: Optipack GmbH & Co. KG, 86850 Fischach-Aretsried (DE)
(72) Erfinder: Westphal, Bodo, 37075 Göttingen (DE)
(74) Vertreter: Stahl, Gerhard F.W.

(56) Entgegenhaltungen:
- EP-A- 0 201 303
- US-A- 5 262 181

## Beschreibung

Die Erfindung betrifft eine Vorrichtung zum Tiefziehen von becherförmigen Körpern aus einer erhitzten Kunststoffolie, umfassend ein Oberwerkzeug und ein Unterwerkzeug, die relativ zueinander koaxial beweglich sind, um die Kunststoffolie zwischen sich einzuklemmen, und einen in dem Oberwerkzeug angeordneten Vorstrecker, der am unteren Ende einer in dem Oberwerkzeug koaxial verschiebbar gelagerten und mit einem Antrieb verbundenen Stange befestigt ist.

Bei einer in der DE 20 63 402 B2 offenbarten Vorrichtung dieser Art sind in der Stange und in dem Vorstrecker Luftkanäle ausgebildet, die über ein Steuerventil mit einer Druckluftquelle verbindbar sind. Wenn der Vorstrecker seine untere Endstellung erreicht hat, wird das Steuerventil geöffnet, um den von dem Vorstrecker, dem Oberwerkzeug und der Folie begrenzten Raum über die Luftkanäle mit der Druckluftquelle zu verbinden. Die an dem Vorstrecker anliegende Oberseite der Folie wird daher mit Druckluft beaufschlagt, so daß die erhitzte Folie an die Innenfläche des Unterwerkzeugs angedrückt und in die Endform gebracht wird. Wenn die Verformung der Kunststoffolie abgeschlossen ist, dann muß die in der Vorrichtung enthaltene Druckluft abgeleitet und entspannt werden, bevor das Ober- und Unterwerkzeug zum Auswerfen des ausgeformten becherförmigen Körpers auseinandergefahren werden können. Bei dieser bekannten Vorrichtung wird sowohl der Raum vor als auch hinter dem Vorstrecker mit Druckluft beaufschlagt. Die zum Ausformen eines becherförmigen Körpers erforderliche Druckluftmenge ist daher verhältnismäßig groß. Da die Erzeugung der erforderlichen Druckluft mit nicht unerheblichen Kosten verbunden ist, ist die Wirtschaftlichkeit dieser bekannten Vorrichtung jedoch unbefriedigend.

Eine in dieser Hinsicht verbesserte Vorrichtung ist in der DE 199 56 506 A1 offenbart. Diese Weiterbildung besteht darin, daß der Vorstrecker aus einem mit der Kunststoffolie in Berührung kommenden Unterteil und aus einem mit diesem fest verbundenen Kolben besteht, der mit einer an der Innenwand des Niederhalter anliegenden Dichtung versehen ist. Durch diese konstruktive Maßnahme wird der mit Druckluft zu beaufschlagende Raum beträchtlich verkleinert, und die Wirtschaftlichkeit der Vorrichtung kann somit gesteigert werden. Wahlweise kann die Oberseite des Kolbens mit Druckluft beaufschlagt werden, um die von der Stange auf den Vorstrecker ausgeübte Vortriebskraft zu unterstützen. Diese Maßnahme ermöglicht eine schwächere Ausbildung des der Stange zugeordneten Antriebs.

Alle diese bekannten Vorrichtungen benötigen einen äußeren Verdichter zur Erzeugung von Druckluft, und es sind Ventile zur Steuerung der Zufuhr und der Ableitung der Druckluft erforderlich. Diese Bauteile sind aber verhältnismäßig kostspielig. Im übrigen ist es auch nicht möglich, die Geschwindigkeit des Druckanstiegs in der Vorrichtung und die Höhe des Enddrucks beliebig zu wählen. Durch die in die Vorrichtung einströmende Druckluft kommt es auch zu einer örtlichen Abkühlung der erhitzten Kunststoffolie, wodurch deren Verstreckung beeinträchtigt wird. Üblicherweise umfaßt eine Anlage zum Tiefziehen von becherförmigen Körpern eine Vielzahl von Vorrichtungen der eingangs genannten Art, die mit einer gemeinsamen Druckluftquelle verbunden sind. Wenn die Kunststoffolie bei dem Tiefziehvorgang in einer dieser Vorrichtungen zerreißen sollte, dann kommt es zu einem Druckabfall, von dem auch alle anderen Vorrichtungen der Anlage erfaßt werden, so daß der gesamte Arbeitsprozeß gestört ist.

Der Erfindung liegt die Aufgabe zugrunde, die gattungsgemäße Vorrichtung dahingehend weiterzubilden, daß sich mit einem geringen konstruktiven Aufwand die Produktion hinsichtlich Quantität und Qualität verbessern läßt.

Erfindungsgemäß wird diese Aufgabe dadurch gelöst, daß über dem Vorstrecker und koaxial zu diesem ein gesonderter Verdichterkolben vorgesehen ist, der in dem Oberwerkzeug abgedichtet geführt ist, und dem eine eigene Antriebseinrichtung zugeordnet ist.

Durch entsprechende Zustellung des Verdichterkolbens ist der Druckanstieg in der Vorrichtung beliebig wählbar, wodurch das Gleitverhalten der Kunststoffolie auf dem Vorstrecker positiv beeinflußt werden kann. Da der Druckanstieg ausschließlich durch eine Verkleinerung des über der Kunststoffolie befindlichen Raumes bewirkt wird, sind ein äußerer Verdichter und die zugehörigen Steuerventile entbehrlich. Bei der Verdichtung durch Volumenverkleinerung treten praktisch keine Luftströmungen auf, welche die erhitzte Folie örtlich abkühlen und dadurch deren Verstreckung beeinträchtigen könnten.

Zweckmäßige Weiterbildungen der Erfindung ergeben sich aus den Unteransprüchen.

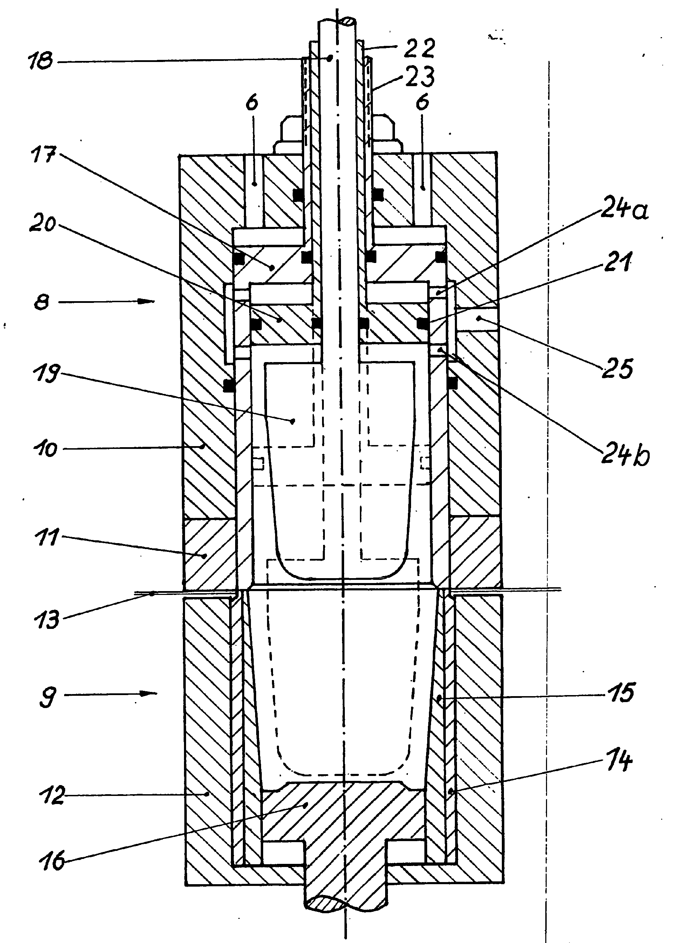

Ein Ausführungsbeispiel der Erfindung ist in der Zeichnung dargestellt und wird nachfolgend näher erläutert.

Die einzige Figur der Zeichnung zeigt einen Längsschnitt durch eine Vorrichtung zum Tiefziehen von becherförmigen Körpern aus einer erhitzten Kunststoffolie.

Die schematisch dargestellte Vorrichtung besteht aus einem Oberwerkzeug 8 und einem Unterwerkzeug 9. Das Oberwerkzeug 8 umfaßt einen rohrförmigen Mantel 10 und eine mit diesem koaxial verbundene ringförmige Schnittplatte 11. Das Unterwerkzeug 9 umfaßt ebenfalls einen rohrförmigen Mantel 12. Das Unterwerkzeug 9 ist gegenüber dem Oberwerkzeug 8 vertikal beweglich, um dazwischen eine Folie 13 aus einem thermoplastischen Kunststoff einzuklemmen. In eine Sackbohrung des Mantels 12 des Unterwerkzeugs 9 sind ein Schnittstempel 14 und ein gekühlter Formeinsatz 15 konzentrisch eingesetzt. In dem Formeinsatz 15 ist ein Auswerfer 16 vertikal beweglich gelagert.

In einer Sackbohrung des Mantels 10 des Oberwerkzeugs 8 ist ein Niederhalter 17 vertikal beweglich gelagert. Der Niederhalter 17 ist pneumatisch nach unten vorgespannt, so daß er über die Unterseite der Schnittplatte 11 vorsteht. Zu diesem Zweck ist der Mantel 10 mit einer Bohrung 6 versehen, über die der Raum über dem Niederhalter 17 mit einer Druckluftquelle verbunden ist. Ein nabenartiger Fortsatz 23 des Niederhalters 17 ist in einer Bohrung des Mantels 10 vertikal beweglich gelagert. Beim Hochfahren des Unterwerkzeugs 9 drückt der Niederhalter 17 die Kunststoffolie 13 gegen den oberen Rand des Schnittstempels 14, bevor der Mantel 12 des Unterwerkzeugs 9 an der Schnittplatte 11 zur Anlage gelangt. In dem nabenartigen Fortsatz 23 des Niederhalters 17 ist eine rohrförmige Kolbenstange 22 vertikal beweglich gelagert, deren unteres Ende mit einem Verdichterkolben 20 verbunden oder einstückig ausgebildet ist. Der Verdichterkolben 20 liegt mit einer Dichtung 21 am Innenumfang des Niederhalters 17 dichtend an. In der Kolbenstange 22 ist eine Stange 18 vertikal beweglich gelagert, deren unteres Ende mit einem Vorstrecker 19 verbunden oder einstückig ausgebildet ist. Die Stange 18 und die Kolbenstange 22 sind mit (nicht gezeigten) Antrieben verbunden. Die vorstehend genannten Bauteile sind koaxial angeordnet und gegeneinander abgedichtet. Im Niederhalter 17 und im Oberwerkzeug 8 sind Bohrungen 24a und 24b bzw. 25 ausgebildet, die zur Belüftung des Raumes über und unter dem Verdichterkolben 20 dienen. Der über dem Verdichterkolben 20 befindliche Raum ist über die Bohrung 24a ständig mit der Atmosphäre verbunden. Die Oberseite des Verdichterkolbens 20 wird daher stets mit dem atmosphärischen Druck beaufschlagt. Im Gegensatz dazu ist der unter dem Verdichterkolben 20 befindliche Raum nur dann mit der Atmosphäre verbunden, wenn sich der Kolben 20 in seiner in der Zeichnung mit durchgezogenen Linien dargestellten oberen Endstellung befindet.

Zum Tiefziehen eines becherförmigen Körpers wird die mit einer (nicht gezeigten) Heizeinrichtung erhitzte Kunststoffolie 13 zwischen dem Oberwerkzeug 8 und dem abgesenkten Unterwerkzeug 9 angeordnet. Daraufhin wird das Unterwerkzeug 9 nach oben bewegt, bis es die Folie 13 an das Oberwerkzeug 8 andrückt, wie in der Zeichnung dargestellt. Daraufhin wird die Stange 18 mit einer (nicht gezeigten) mechanischen oder pneumatischen Antriebseinrichtung nach unten bewegt. Dadurch gelangt der Vorstrecker 19 an der erhitzten Kunststoffolie 13 zur Anlage und drückt diese nach unten in den von dem Formeinsatz 15 begrenzten Formhohlraum hinein. In der Zeichnung ist die untere Endstellung des Vorstreckers 19 mit strichpunktierten Linien dargestellt. Daraufhin wird die Kolbenstange 22 mit einer (nicht dargestellten) mechanischen Antriebseinrichtung in die mit unterbrochenen Linien angedeutete untere Endstellung nach unten bewegt. Dadurch wird der Druck in dem unter dem Verdichterkolben 20 befindlichen Raum erhöht, so daß die Kunststoffolie 13 an die Innenfläche des Formeinsatzes 15 bzw. an die Oberseite des Auswerfers 16 angedrückt wird. Durch die Berührung mit dem gekühlten Formeinsatz 15 kühlt die tiefgezogenen Kunststoffolie 13 ab, und sie wird formstabil. Daraufhin werden die Stange 18 zusammen mit dem Vorstrecker 19 und die Kolbenstange 22 zusammen mit dem Kolben 20 nach oben bewegt. Das Volumen des von dem Kolben 20, dem Niederhalter 17 und der tiefgezogenen Folie 13 begrenzten Raumes nimmt dabei zu, so daß sich die darin enthaltene verdichtete Luft entspannt. Über die Bohrungen 24b und 25 des Vorstreckers 19 bzw. des Mantels 10 kann der Druck vollständig abgebaut werden. Sodann wird das Unterwerkzeug 9 nach unten bewegt, und der Auswerfer 16 wird gegenüber dem Formeinsatz 15 nach oben bewegt, um den tiefgezogenen becherförmigen Körper auszuwerfen.

Durch die steuerbare Abwärtsbewegung des Verdichterkolbens 20 kann der Druckanstieg und der in dem Raum unter dem Verdichterkolben 20 herrschende Enddruck den jeweiligen Bedürfnissen entsprechend gesteuert werden. Der Verdichterkolben 20 kann auch bereits ein Stück nach unten bewegt werden, bevor der Vorstrecker 19 seine untere Endstellung erreicht hat, um eine Vorverdichtung zu bewirken. Durch eine geeignete Synchronisierung der Antriebseinrichtungen für die Stange 18 und die Kolbenstange 22 kann dann eine gemeinsame Abwärtsbewegung von Vorstrecker 19 und Verdichterkolben 20 bewirkt werden. Dadurch kann der Druck der Vorverdichtung beibehalten, gesteigert oder auch gesenkt werden.

Der nach erfolgter Vorverdichtung noch zur Verfügung stehende Hub des Verdichterkolbens kann unter Umständen zu klein sein, um den zur Ausformung des Bechers erforderlichen Druckanstieg zu bewirken. In diesem Fall ist es zweckmäßig, in den Raum zwischen Verdichterkolben und Kunststoffolie zusätzlich Druckluft einzuspeisen. Zu diesem Zweck können in der Stange 18 oder in dem Oberwerkzeug 8 Kanäle ausgebildet sein, die über ein oder mehrere steuerbare Ventile mit einem Druckluftspeicher verbunden sind.

### Bezugszeichenliste

- 6: Bohrung in 10
- 8: Oberwerkzeug
- 9: Unterwerkzeug
- 10: Mantel von 8
- 11: Schnittplatte
- 12: Mantel von 9
- 13: Kunststoffolie
- 14: Schnittstempel
- 15: Formeinsatz
- 16: Auswerfer
- 17: Niederhalter
- 18: Stange
- 19: Vorstrecker
- 20: Verdichterkolben
- 21: Dichtung
- 22: Kolbenstange
- 23: Fortsatz von 17
- 24a,b: Bohrung in 17
- 25: Bohrung in 10

## Patentansprüche

1. Vorrichtung zum Tiefziehen von becherförmigen Körpern aus einer erhitzten Kunststoffolie, umfassend ein Oberwerkzeug (8) und ein Unterwerkzeug (9), die relativ zueinander koaxial beweglich sind, um die Kunststoffolie zwischen sich einzuklemmen, und einen in dem Oberwerkzeug angeordneten Vorstrecker (19), der am unteren Ende einer in dem Oberwerkzeug koaxial verschiebbar gelagerten und mit einem Antrieb verbundenen Stange (18) befestigt ist, **dadurch gekennzeichnet, daß** über dem Vorstrecker (19) und koaxial zu diesem ein gesonderter Verdichterkolben (20) vorgesehen ist, der in dem Oberwerkzeug (8) abgedichtet geführt ist, und dem eine eigene Antriebseinrichtung zugeordnet ist.

2. Vorrichtung nach Anspruch 1, **dadurch gekennzeichnet, daß** in dem Oberwerkzeug (8) eine Entlüftungsöffnung (24a) vorgesehen ist, die den über dem Verdichterkolben (20) befindlichen Raum ständig mit der Atmosphäre verbindet.

3. Vorrichtung nach Anspruch 2, **dadurch gekennzeichnet, daß** in dem Oberwerkzeug (8) eine zweite Entlüftungsöffnung (24b) vorgesehen ist, die den unter dem Verdichterkolben (20) befindlichen Raum mit der Atmosphäre verbindet, wenn sich der Verdichterkolben in seiner oberen Endstellung befindet.

4. Vorrichtung nach einem der Ansprüche 1 bis 3, **dadurch gekennzeichnet, daß** der Verdichterkolben 20 am unteren Ende einer in dem Oberwerkzeug (8) koaxial verschiebbar geführten Kolbenstange (22) befestigt ist, die mit der dem Verdichterkolben (20) zugeordneten Antriebseinrichtung verbunden ist.

5. Vorrichtung nach einem der Ansprüche 1 bis 4, **dadurch gekennzeichnet, daß** in der Stange (18) oder in dem Oberwerkzeug (8) Kanäle ausgebildet sind, die über ein oder mehrere steuerbare Ventile mit einem Druckluftspeicher verbunden sind.

## Claims

1. Apparatus for thermoforming cup like containers from a heated plastic film, including a top tool (8) and a bottom tool (9), which can move coaxially relative to each other in order to clamp the plastic film between them, and a prestretcher (19) arranged in the top tool, which is fastened to the bottom end of a rod (18) connected to a drive and supported, so that it can be displaced coaxially in the top tool, **characterised in that** a separate compressor piston (20) is provided above the prestretcher (19) and coaxially to this, which is sealedly led in the top tool (8) and has its own drive device allocated to it.

2. Apparatus according to claim 1, **characterised in that** a ventilation opening (24a) is provided in the top tool (8), which is connected permanently to the atmosphere through the space above the compressor piston (20).

3. Apparatus according to claim 2, **characterised in that** a second ventilation opening (24b) is provided in the top tool (8), which connects the space below the compressor piston (20) with the atmosphere, if the compressor piston is in its top end position.

4. Apparatus according to one of claims 1 to 3, **characterised in that** the compressor piston 20 is fastened at the bottom end of a piston rod (22), which is led in the top tool (8), so that it can be displaced coaxially, which is connected with the drive device allocated to the compressor piston (20).

5. Apparatus according to one of claims 1 to 4, **characterised in that** channels are made in the rod (18) or in the top tool (8), which are connected to a compressed air store through one or several controllable valves.

## Revendications

1. Dispositif d'emboutissage de corps en forme de gobelet à partir d'une feuille en matière plastique chauffée, comprenant un outil supérieur (8) et un outil inférieur (9), qui sont mobiles de manière coaxiale relativement l'un vers l'autre, afin de serrer entre eux la feuille en matière plastique, et un dégrossisseur (19) disposé dans l'outil supérieur, lequel dégrossisseur est fixé à l'extrémité inférieure d'une tige (18) logée coaxialement de manière déplaçable dans l'outil supérieur et reliée à un mécanisme d'entraînement, **caractérisé en ce qu'**un piston de compresseur séparé (20) est prévu au-dessus du dégrossisseur (19) et coaxialement à celui-ci, lequel piston de compresseur est guidé de manière étanche dans l'outil supérieur (8), et auquel est affectée une installation d'entraînement individuelle.

2. Dispositif selon la revendication 1, **caractérisé en ce qu'**un orifice d'aération (24a) est prévu dans l'outil supérieur (8), lequel orifice relie constamment l'espace se trouvant au-dessus du piston de compresseur (20) avec l'atmosphère.

3. Dispositif selon la revendication 2, **caractérisé en ce qu'**un second orifice d'aération (24b) est prévu dans l'outil supérieur (8), lequel orifice relie l'espace se trouvant en dessous du piston de compresseur (20) avec l'atmosphère, lorsque le piston du compresseur se trouve dans sa position extrême supérieure.

4. Dispositif selon l'une des revendications 1 à 3, **caractérisé en ce que** le piston de compresseur (20) est fixé à l'extrémité inférieure d'une tige de piston (22) guidée coaxialement de manière déplaçable dans l'outil supérieur (8), laquelle tige de piston est reliée à l'installation d'entraînement affectée au piston de compresseur (20).

5. Dispositif selon l'une des revendications 1 à 4, **caractérisé en ce que** des canaux sont formés dans la tige (18) ou dans l'outil supérieur (8), lesquels sont reliés à un réservoir d'air comprimé par le biais d'une ou de plusieurs soupapes réglables.
